# FASCICULE DE BREVET EUROPEEN

(11) **EP 0 948 179 B1**
(45) Date de publication et mention de la délivrance du brevet: **24.01.2007**
(21) Numéro de dépôt: 99200896.1
(22) Date de dépôt: 23.03.1999
(51) Int. Cl.: H04M 1/72, H04Q 7/32

(54) **Procédé de contrôle de portée radioélectrique, équipement de télécommunications sans fil mettant en oeuvre ce procédé, station de base et combiné mobile d'un tel équipement**
Verfahren zur Funkreichweiteregelung, drahtloses Funkkommunikationsgerät unter Verwendung von diesem Verfahren, Basisstation und Handgerät dafür
Method for controlling the radioelectrical range, wireless telecommunication equipment using this method, base station and mobile handset of such an equipment

(30) Priorité: 31.03.1998 FR 9803985
(43) Date de publication de la demande: 06.10.1999
(73) Titulaire: Koninklijke Philips Electronics N.V., 5621 BA Eindhoven (NL)
(72) Inventeur: Bozzetto, Olivier, 75008 Paris (FR); Bordeau, Jean-Pascal, 75008 Paris (FR)
(74) Mandataire: Pennings, Johannes

(56) Documents cités:
- EP-A- 0 690 601
- US-A- 5 193 216
- US-A- 5 363 426
- US-A- 5 373 548

## Description

L'invention concerne un procédé de contrôle de limite de portée dans un système de télécommunications sans fil comprenant au moins deux parties susceptibles de communiquer par voie radioélectrique à l'intérieur d'une zone de portée, le procédé comportant une étape de lecture d'un niveau de champ électrique reçu par la deuxième partie et émis par la première partie pour détecter un signal électrique de limite de portée.
Elle concerne également un équipement de télécommunications sans fil comprenant au moins une première et une deuxième partie pouvant communiquer par voie radioélectrique à l'intérieur d'une zone de portée, ledit équipement comportant des moyens de détection d'un niveau de champ électrique reçu par la deuxième partie et émis par la première partie pour détecter un signal de limite de portée.
Elle concerne enfin une station de base et un combiné convenant à un tel équipement.
Elle s'applique notamment aux téléphones sans fils conformes à une norme de type CT0.

La publication de l'ICC conference 1983 volume 1, pages 64 à 67, dont la conférence intitulée : Integrating Communication for World Progress s'est déroulée à Boston, Massachussetts du 19 au 22 Juin, 1983 décrit une méthode de prédiction de la portée radioélectrique d'un équipement de télécommunications basée sur la mesure d'un indicateur de la puissance du champ électrique reçu localement et prenant en compte des facteurs d'environnement tels la hauteur et la densité des bâtiments. Cette méthode utilise des bases de données qui permettent de déterminer la topographie du terrain entre une station de base et un combiné mobile. Un tel procédé est également connu du document US-A-5373548.

Un objet de l'invention est de fournir des moyens simples pour éviter qu'une communication radioélectrique entre deux parties d'un équipement de télécommunications soit coupée à cause de conditions environnementales qui perturbent le champ électrique local reçu par l'une des parties. Pour cela, il est prévu un procédé tel que mentionné dans le préambule remarquable en ce que la détection dudit signal de limite de portée déclenche une étape de contrôle de présence pour vérifier la présence de ladite première partie à l'intérieur de la zone de portée, comprenant une émission vers ladite première partie d'un message radioélectrique de demande de confirmation de présence.

Selon une caractéristique importante du procédé, ladite étape de contrôle de présence comporte :
- une étape d'itération pour :
   - envoyer ledit message radioélectrique de demande de confirmation de présence à ladite première partie et
   - recevoir un message de confirmation de présence, cette étape étant réitérée tant que le message de confirmation est reçu par ladite deuxième partie dans un laps de temps déterminé et
- une étape de coupure de communications radioélectriques entre lesdites parties déclenchée si ladite confirmation n'est pas reçue dans ledit laps de temps.
Selon une autre caractéristique importante du procédé, ladite étape d'itération est stoppée lorsque, durant ladite étape de lecture, on détecte un niveau de champ électrique reçu supérieur à un seuil de détection prédéterminé.

De même, l'invention fournit un équipement tel que mentionné dans le préambule remarquable en ce qu'il comporte des moyens de contrôle de présence pour vérifier la présence de la première partie à l'intérieur de ladite zone, ces moyens étant déclenchés par la détection dudit signal de limite de portée.
Selon une caractéristique importante de l'invention, lesdits moyens de contrôle de présence sont désactivés par la détection d'un niveau de champ électrique reçu supérieur à seuil prédéterminé.
Selon une autre caractéristique de l'invention, lesdits moyens de contrôle de présence comprennent :
- des moyens d'émission pour envoyer, à des intervalles de temps donnés, un message de demande de confirmation de présence à ladite première partie,
- des moyens de temporisation pour déclencher une temporisation correspondant auxdits intervalles de temps,
- des moyens de réception pour recevoir ledit message de confirmation de présence,
- des moyens de coupure de communications radioélectriques déclenchés si ledit message de confirmation de présence n'est pas reçu par ladite deuxième partie dans un laps de temps déterminé.

La description suivante, faite en regard des dessins ci-annexés, le tout donné à titre d'exemple non limitatif fera bien comprendre comment l'invention peut être réalisée.
La figure 1 représente un procédé selon l'invention.
La figure 2 est un schéma de principe de l'une des parties d'un équipement de télécommunications selon l'invention pour mettre en oeuvre le procédé de la figure 1.
La figure 3 représente un équipement téléphonique selon l'invention.

Bien que le fonctionnement de l'invention va être décrit dans le sens base vers mobile, la gestion est identique dans l'autre sens.

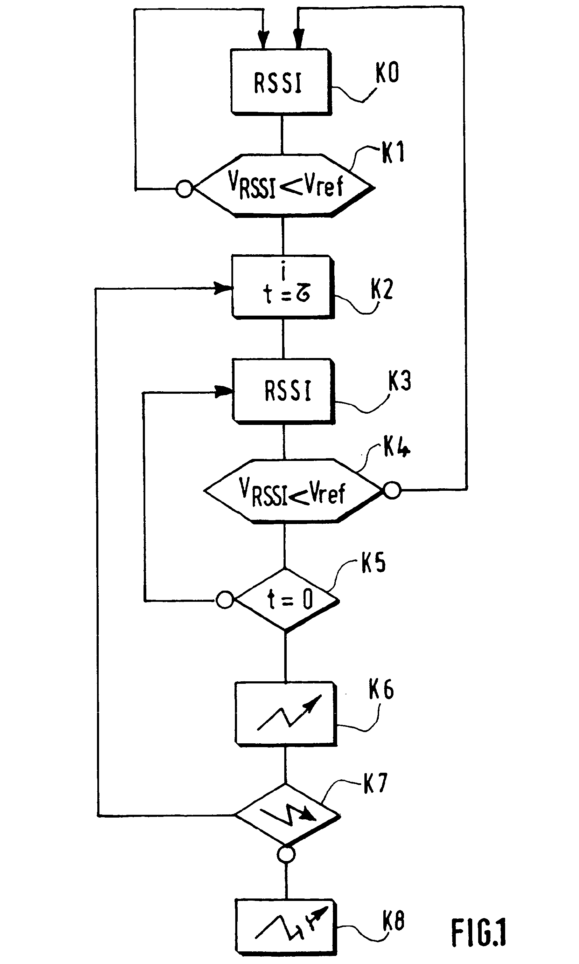

Un exemple de procédé de contrôle de limite de portée est illustré à la figure 1 sous la forme d'un organigramme dont les cases K0 à K8 représentent les étapes principales. Ce procédé peut avantageusement être mis en oeuvre dans un équipement téléphonique sans fil composé d'un appareil mobile appelé combiné et d'un appareil fixe relié au réseau commuté appelé base, pour contrôler la distance maximale de portée radioélectrique entre les deux appareils. Ce procédé peut être implémenté de façon parfaitement symétrique dans les deux appareils. A titre d'exemple son fonctionnement va être décrit dans le cas où il est implémenté dans la base.
A la case K0, le procédé débute par une étape de lecture du niveau de champ électrique émis par le combiné et reçu par la base. Il peut s'agir par exemple de la lecture d'un indicateur de type RSSI (de l'anglais Received Signal Strength Indicator) utilisé dans la plupart des téléphones sans fil notamment conformes à la norme CT0, pour indiquer le niveau de puissance du champ reçu.
La case K1 représente une étape de test de détection d'un signal de limite de portée qui consiste à vérifier le niveau de puissance du champ RSSI. Ce niveau est testé en permanence pour détecter un signal de limite de portée (V_{RSSI} < V_{ref}) et déclencher l'étape de contrôle de limite de portée. Tant que le niveau du champ RSSI est supérieur à un seuil de détection prédéterminé, c'est-à-dire tant que le signal de limite de portée n'est pas détecté, l'étape de contrôle de limite de portée n'est pas déclenchée. La détermination du seuil de détection de portée limite dépend des exigences de qualité radio imposées par le constructeur ou de la norme de téléphonie considérée. La détection du signal de limite de portée (V_{RSSI} < V_{ref}) déclenche l'étape de contrôle de présence débutant à la case K2.
Une première itération (i) de cette étape déclenche une temporisation (t = τ). La lecture de l'indicateur RSSI continue d'être effectuée à la case K3. Si le niveau du champ RSSI repasse au dessus du seuil de détection à la case K4, la temporisation est arrêtée et le procédé reprend à l'étape K0 pour surveiller le niveau du champ RSSI.
En revanche, si le niveau du champ RSSI reste en dessous du seuil de détection (V_{RSSI} < V_{ref}), on passe à l'étape K5 pour tester la valeur de la temporisation τ. Si la temporisation expire (τ = 0), alors que le signal de détection de limite de portée avait été détecté à l'étape K1 et que le test de l'étape K4 est positif (V_{RSSI} < V_{ref}), la base émet un message vers le combiné mobile à la case K6, pour lui demander une confirmation de présence.
Si le combiné se trouve effectivement dans la zone de portée radioélectrique de la base, il reçoit ce message et renvoie à la base un message de confirmation. Si cette confirmation est reçue à la case K7, dans un temps défini correspondant au temps nécessaire pour l'émission et la réception d'une trame radio, de l'ordre de 100 millisecondes, le procédé réitère les étapes K2 à K7 jusqu'à ce que le message de confirmation attendu à l'étape K7 ne soit pas reçu par la base qui coupe alors la communication radio à la case K8.

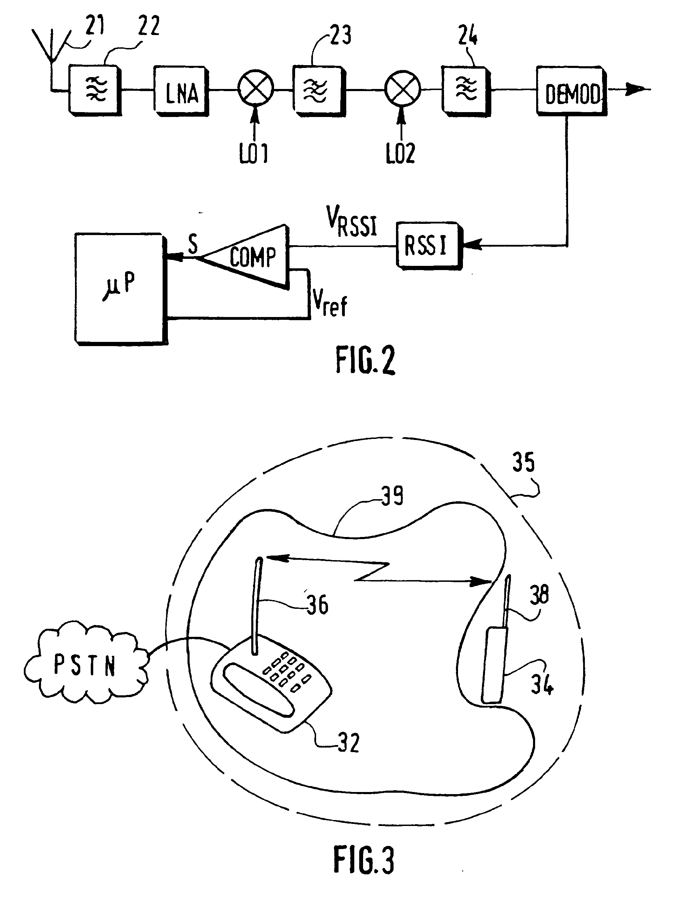

La figure 2 détaille le fonctionnement de l'une des parties d'un équipement de télécommunications selon l'invention. Il s'agit par exemple de la base d'un téléphone sans fil ou bien du combiné, leurs rôles étant symétriques pour l'invention.
Le schéma bloc est un schéma type d'un récepteur radio en modulation de fréquence. Il comprend une antenne d'émission / réception 21, un filtre passe-bande 22, un amplificateur faible bruit LNA, un premier oscillateur local L01, un premier filtre passe-bas 23, un deuxième oscillateur local L02, un deuxième filtre passe-bas 24, un démodulateur DEMOD, un détecteur de champ électrique RSSI, un comparateur programmable COMP et un microprocesseur µP.
Une sortie du démodulateur DEMOD est connectée au circuit audio de la base ou du combiné et une autre sortie est reliée au détecteur de champ RSSI. Le détecteur RSSI mesure le champ électrique reçu et fournit en sortie une tension V_{RSSI} fonction du champ mesuré. La tension V_{RSSI} est ensuite entrée dans le comparateur COMP et comparée à une tension de référence V_{ref} programmée par le microprocesseur µP. Le résultat de la comparaison S est une information binaire qui indique si le canal est libre (par exemple S = 0) ou occupé (par exemple S = 1). Ce résultat est communiqué au processeur pour être traité.
Un logiciel embarqué dans le processeur analyse en permanence l'information en sortie S du comparateur. Dans cet exemple, S = 1 indique que la base ou le combiné détecte la présence de l'autre partie et S = 0 est le signal de limite de portée qui indique que la base ou le combiné ne détecte pas la présence de l'autre partie.
Le processeur comporte également :
- une horloge interne associée à des moyens de temporisation pour déclencher une temporisation lorsque le signal de limite de portée S= 0 est détecté,
- des moyens d'émission pour envoyer via l'antenne 21, à l'expiration de la temporisation, un message de demande de confirmation de présence à l'autre partie,
- des moyens de réception pour recevoir et traiter le message de confirmation de présence et
- des moyens pour couper la communication entre les deux parties si ledit message de confirmation de présence n'est pas reçu avant l'expiration de la temporisation.

La figure 3 représente un exemple d'équipement téléphonique sans fil selon l'invention. Il est constitué d'une base 32 reliée au réseau commuté public PSTN et d'un combiné sans fil 34 susceptibles de communiquer par voie radioélectrique à l'intérieur d'une zone de portée radioélectrique 35 au moyen des antennes d'émission / réception 36 et 38.
Pendant la communication radio, la base vérifie la présence du mobile à l'intérieur d'une zone de détection de limite de portée 39 par lecture du champ RSSI. En champ libre, c'est-à-dire lorsque aucun obstacle (mur ou appareil électrique en fonctionnement) ne perturbe le champ électrique émis par le mobile, la zone de portée radioélectrique 35 est confondue avec la zone de détection de limite de portée 39. La situation idéale étant rarement respectée, il arrive fréquemment que le mobile soit hors de la zone de portée radio 39 selon le champ RSSI tout en se trouvant à l'intérieur de la zone réelle de portée radio 35, comme l'illustre la figure 3. Dans cette situation, la communication risque d'être coupée, comme l'exigent certaines normes et notamment les normes analogiques CT0 et CT1. Pour remédier à cet inconvénient, la base déclenche alors le protocole de vérification de présence représenté à la figure 1 pour éviter de couper la communication alors que la qualité radio est suffisante.

Il va de soi que les exemples décrits et représentés ne sont pas limitatifs et qu'il existe de nombreuses variantes de réalisation de l'invention, celles-ci pouvant être déduites de la présente description sans sortir du cadre de l'invention.

## Revendications

1. Procédé de contrôle de limite de portée dans un système de télécommunications sans fil comprenant au moins deux parties susceptibles de communiquer par voie radioélectrique à l'intérieur d'une zone de portée, le procédé comportant les étapes suivantes :
- de lecture d'un niveau de champ électrique reçu par la deuxième partie et émis par la première partie
- de détection d'un signal électrique de limite de portée lorsqu'un niveau de champ électrique reçu par la deuxième partie est inférieur à un seuil prédéterminé,
- de vérification de présence pour vérifier la présence de ladite première partie à l'intérieur de la zone de portée comprenant l'émission d'un message radioélectrique de demande de confirmation de présence à ladite première partie et la réception d'un message de confirmation de présence,
**caractérisé en ce que** la détection dudit signal de limite de portée déclenche ladite étape de contrôle de présence et **en ce que** cette étape est réitérée tant que le message de confirmation est reçu par ladite deuxième partie dans un laps de temps déterminé, la communication radioélectrique entre les deux parties étant coupée si ladite confirmation n'est pas reçue dans ledit laps de temps.

2. Procédé selon la revendication 1, **caractérisé en ce que** ladite étape d'itération est stoppée lorsque, durant ladite étape de lecture, on détecte un niveau de champ électrique reçu supérieur à un seuil de détection prédéterminé.

3. Equipement de télécommunications sans fil comprenant au moins une première et une deuxième partie pouvant établir une communication par voie radioélectrique à l'intérieur d'une zone de portée, ledit équipement comportant :
- des moyens de détection d'un niveau de champ électrique reçu par la deuxième partie et émis par la première partie et
- des moyens pour détecter un signal de limite de portée lorsque le niveau de champ électrique reçu est inférieur à un seuil donné,
**caractérisé en ce qu'**il comporte des moyens de contrôle de présence, déclenchés par ladite détection de limite de portée, comprenant :
des moyens d'émission pour envoyer, à des intervalles de temps donnés, un message de demande de confirmation de présence à ladite première partie,
des moyens de temporisation pour déclencher une temporisation correspondant auxdits intervalles de temps,
des moyens de réception pour recevoir ledit message de confirmation de présence.

4. Equipement de télécommunications sans fil selon la revendication 3, comportant des moyens de coupure de communications radioélectriques déclenchés si ledit message de confirmation de présence n'est pas reçu par ladite deuxième partie dans un laps de temps déterminé.

5. Equipement de télécommunications selon la revendication 3, **caractérisé en ce que** lesdits moyens de contrôle de présence sont désactivés par la détection d'un niveau de champ électrique reçu supérieur à un seuil prédéterminé.

6. Station de base d'un équipement téléphonique sans fil comprenant en outre un combiné mobile, la station de base et le combiné pouvant établir une communication par voie radioélectrique à l'intérieur d'une zone de portée, la station de base comportant :
- des moyens de détection d'un niveau de champ électrique reçu émis par le combiné,
- des moyens pour détecter un signal de limite de portée lorsque le niveau de champ électrique reçu est inférieur à un seuil donné, **caractérisée en ce qu'**elle comporte :
- des moyens de contrôle de présence, déclenchés par ladite détection de limite de portée, pour vérifier la présence du combiné à l'intérieur de ladite zone de portée radioélectrique comprenant :
des moyens d'émission pour envoyer, à des intervalles de temps donnés, un message de demande de confirmation de présence au combiné,
des moyens de temporisation pour déclencher une temporisation correspondant auxdits intervalles de temps,
des moyens de réception pour recevoir ledit message de confirmation de présence.

7. Combiné mobile d'un équipement téléphonique sans fil comprenant en outre une station de base, la station de base et le combiné pouvant établir une communication par voie radioélectrique à l'intérieur d'une zone de portée, le combiné comportant :
- des moyens de détection d'un niveau de champ électrique reçu émis par la station de base,
- des moyens pour détecter un signal de limite de portée lorsque le niveau de champ électrique reçu est inférieur à un seuil donné, **caractérisé en ce qu'**il comporte :
- des moyens de contrôle de présence, déclenchés par ladite détection de limite de portée, pour vérifier la présence de la station de base à l'intérieur de ladite zone de portée radioélectrique comprenant :
des moyens d'émission pour envoyer, à des intervalles de temps donnés, un message de demande de confirmation de présence à la station de base,
des moyens de temporisation pour déclencher une temporisation correspondant auxdits intervalles de temps,
des moyens de réception pour recevoir ledit message de confirmation de présence.

## Claims

1. A range-limit verification method in a wireless telecommunication system including at least two parts that may communicate by radio channel in a coverage area, the method including the following steps:
- of reading an electric field level received by the second part and transmitted by the first part;
- of detecting an electric range-limit signal when the an electric field level received by the second part is lower than a predetermined threshold;
- presence verification step for verifying the presence of said first part in the coverage area, including a transmission of a radio message requesting a confirmation of presence to said first part and reception of a presence confirmation message,
**characterized in that** the detection of said range-limit signal triggers said presence verification step and **in that** this step is repeated as long as the confirmation message is received by said second part in a given period of time, whereas the radio communication between said two parts is cut off if said confirmation is not received in said period of time.

2. A method as claimed in claim 1, **characterized in that** said repetition step is stopped when, during said reading step, a received electric field level is detected that is higher than a given detection level.

3. Wireless telecommunication equipment comprising at least a first and a second part, which may set up a communication by radio channel in a coverage area, said equipment comprising:
- means for detecting an electric field level received by the second part and transmitted by the first part, and
- means for detecting a range-limit signal when the received electric field level is lower than a given threshold,
**characterized in that** the equipment includes presence verification means triggered as a result of the detection of said range-limit signal, comprising:
transmitting means for sending a message requesting a confirmation of presence to said first part at given time intervals,
delay means for triggering a delay that corresponds to said time intervals, receiving means for receiving said presence confirmation message.

4. Wireless telecommunication equipment as claimed in claim 3, **characterized in that** it comprises means for cutting off radio communications, which are triggered if said presence confirmation message, is not received by said second part in a given period of time.

5. Telecommunication equipment as claimed in claim 3, **characterized in that** said presence verification means are stopped when a received electric field level is detected that is higher than a given threshold.

6. A base station of wireless telephone equipment further comprising a mobile handset, which base station and handset can set up a communication by radio channel in a coverage area, which base station comprises:
- detection means for detecting a received electric field level transmitted by the handset,
- means for detecting a range limit signal when the received electric field level is lower than a given threshold, **characterized in that** the base station comprises:
- presence verification means, triggered by said detection of the coverage limit, for verifying the presence of the handset in said radio coverage area, comprising:
transmitting means for sending a message requesting a confirmation of presence to the handset at given time intervals,
delay means for triggering a delay that corresponds to said time intervals, receiving means for receiving said presence confirmation message.

7. A mobile handset of wireless telephone equipment further comprising a base station, which base station and handset can set up a communication by radio channel in a coverage area, which handset comprises:
- detection means for detecting a received electric field level transmitted by the base station,
- means for detecting a range limit signal when the received electric field level is lower than a given threshold, **characterized in that** the handset comprises:
- presence verification means, triggered by said detection of the coverage limit, for verifying the presence of the base station in said radio coverage area, comprising:
transmitting means for sending a message requesting a confirmation of presence to the base station at given time intervals,
delay means for triggering a delay that corresponds to said time intervals, receiving means for receiving said presence confirmation message.

## Patentansprüche

1. Verfahren zur Reichweitenkontrolle in einem schnurlosen Telekommunikationssystem, umfassend mindestens zwei Teile, die geeignet sind, innerhalb eines Funkbereichs per Funk miteinander zu kommunizieren, wobei das Verfahren die folgenden Schritte umfasst:
- des Lesens eines elektrischen Feldstärkepegels, der vom zweiten Teil empfangen und vom ersten Teil gesendet wird
- des Erkennens eines elektrischen Bereichsgrenzensignals, wenn ein elektrischer Feldstärkepegel, der vom zweiten Teil empfangen wird, kleiner als eine vorbestimmte Schwelle ist,
- der Anwesenheitsprüfung, um die Anwesenheit des ersten Teils innerhalb des Funkbereichs zu prüfen, umfassend das Senden einer Funkmeldung zur Anforderung einer Anwesenheitsbestätigung an den ersten Teil und das Empfangen einer Anwesenheitsbestätigungsmeldung,
**dadurch gekennzeichnet, dass** die Erkennung des Bereichsgrenzensignals den Schritt der Anwesenheitsprüfung auslöst, und dass dieser Schritt wiederholt wird, so lange die Bestätigungsmeldung vom zweiten Teil in einem vorbestimmten Zeitraum empfangen wird, wobei die Funkverbindung zwischen den zwei Teilen getrennt wird, wenn diese Bestätigung nicht in diesem Zeitraum empfangen wird.

2. Verfahren nach Anspruch 1, **gekennzeichnet dadurch, dass** dieser Wiederholungsschritt gestoppt wird, wenn während des Leseschritts ein empfangener Feldstärkepegel erkannt wird, der größer ist als eine vorbestimmte Erkennungsschwelle.

3. Schnurlose Telekommunikationsvorrichtung, umfassend mindestens einen ersten Teil und einen zweiten Teil, die in der Lage sind, innerhalb eines Funkbereichs eine Funkverbindung herzustellen, wobei diese Vorrichtung umfasst:
- Mittel zum Erkennen eines elektrischen Feldstärkepegels, der vom zweiten Teil empfangen und vom ersten Teil gesendet wird, und
- Mittel zum Erkennen eines Bereichsgrenzensignals, wenn der empfangene elektrische Feldstärkepegel kleiner ist als eine bestimmte Schwelle,
**dadurch gekennzeichnet, dass** sie Mittel zur Anwesenheitsprüfung umfasst, die durch diese Bereichsgrenzenerkennung ausgelöst werden, umfassend:
Sendemittel, um in bestimmten Zeitintervallen eine Anwesenheitsbestätigungsanforderungsmeldung an den ersten Teil zu senden,
Verzögerungsmittel, um eine Verzögerung auszulösen, die diesen Zeitintervallen entspricht,
Empfangsmittel, um die Anwesenheitsbestätigungsmeldung zu empfangen.

4. Schnurlose Telekommunikationsvorrichtung nach Anspruch 3, umfassend Mittel zum Trennen von Funkverbindungen, die ausgelöst werden, wenn die Anwesenheitsbestätigungsmeldung nicht in einem vorbestimmten Zeitraum vom zweiten Teil empfangen wird.

5. Schnurlose Telekommunikationsvorrichtung nach Anspruch 3, **dadurch gekennzeichnet, dass** die Mittel zur Anwesenheitsprüfung durch das Erkennen eines empfangenen elektrischen Feldstärkepegels deaktiviert werden, der größer als eine vorbestimmte Schwelle ist.

6. Basisstation einer schnurlosen Telekommunikationsvorrichtung, außerdem umfassend ein mobiles Handgerät, wobei die Basisstation und das Handgerät in der Lage sind, innerhalb eines Funkbereichs eine Funkverbindung herzustellen, wobei diese Basisstation umfasst:
- Mittel zum Erkennen eines empfangenen elektrischen Feldstärkepegels, der vom Handgerät gesendet wird,
- Mittel zum Erkennen eines Bereichsgrenzensignals, wenn der empfangene elektrische Feldstärkepegel kleiner ist als eine bestimmte Schwelle, **dadurch gekennzeichnet, dass** sie umfasst:
- Mittel zur Anwesenheitsprüfung, die durch die Bereichsgrenzenerkennung ausgelöst werden, um die Anwesenheit des Handgeräts innerhalb des Funkbereichs zu prüfen, umfassend:
Sendemittel, um in bestimmten Zeitintervallen eine Anwesenheitsbestätigungsanforderungsmeldung an das Handgerät zu senden,
Verzögerungsmittel, um eine Verzögerung auszulösen, die diesen Zeitintervallen entspricht,
Empfangsmittel, um die Anwesenheitsbestätigungsmeldung zu empfangen.

7. Mobiles Handgerät einer schnurlosen Telekommunikationsvorrichtung, außerdem umfassend eine Basisstation, wobei die Basisstation und das Handgerät in der Lage sind, innerhalb eines Funkbereichs eine Funkverbindung herzustellen, wobei das mobile Handgerät umfasst:
- Mittel zum Erkennen eines empfangenen elektrischen Feldstärkepegels, das von der Basisstation gesendet wird,
- Mittel zum Erkennen eines Bereichsgrenzensignals, wenn der empfangene elektrischen Feldstärkepegel kleiner ist als eine bestimmte Schwelle, **dadurch gekennzeichnet, dass** es umfasst:
- Mittel zur Anwesenheitsprüfung, die durch die Bereichsgrenzenerkennung ausgelöst werden, um die Anwesenheit der Basisstation innerhalb des Funkbereichs zu prüfen, umfassend:
Sendemittel, um in bestimmten Zeitintervallen eine Anwesenheitsbestätigungsanforderungsmeldung an die Basisstation zu senden,
Verzögerungsmittel, um eine Verzögerung auszulösen, die diesen Zeitintervallen entspricht,
Empfangsmittel, um die Anwesenheitsbestätigungsmeldung zu empfangen.
